# FASCICULE DE BREVET EUROPEEN

(11) **EP 3 666 610 B1**
(45) Date de publication et mention de la délivrance du brevet: **17.02.2021**
(21) Numéro de dépôt: 19214602.5
(22) Date de dépôt: 09.12.2019
(51) Int. Cl.: B60T 15/02

(54) **DISPOSITIF D'ACTIONNEMENT D'UN SYSTÈME DE FREINAGE FERROVIAIRE ET VÉHICULE FERROVIAIRE POURVU D'UN TEL DISPOSITIF D'ACTIONNEMENT**
VORRICHTUNG ZUR BETÄTIGUNG EINES SCHIENENFAHRZEUG-BREMSSYSTEMS, UND MIT EINER SOLCHEN BETÄTIGUNGSVORRICHTUNG AUSGESTATTETES SCHIENENFAHRZEUG
DEVICE FOR ACTUATING A RAILWAY BRAKING SYSTEM AND RAILWAY VEHICLE PROVIDED WITH SUCH AN ACTUATING DEVICE

(30) Priorité: 12.12.2018 FR 1872749
(43) Date de publication de la demande: 17.06.2020
(73) Titulaire: Faiveley Transport Amiens, 80000 Amiens (FR)
(72) Inventeur: GONCALVES, Claudino, 80620 RIBEAUCOURT (FR); MAILLARD, Louis, 80136 RIVERY (FR); MARECHAL, Mickael, 80600 HEM HARDINVAL (FR); SALES, Jérémie, 80000 AMIENS (FR)
(74) Mandataire: Santarelli

(56) Documents cités:
- CN-A- 103 437 086
- DE-A1- 2 725 948
- DE-A1- 3 628 061
- FR-A1- 2 102 313
- US-A1- 2017 253 226
- US-B1- 6 220 276

## Description

### Domaine technique de l'invention

L'invention concerne le domaine du freinage des véhicules ferroviaires. Elle concerne plus particulièrement un dispositif d'actionnement, du type manipulateur, prévu pour commander un système de freinage pour véhicule ferroviaire. Elle concerne également les véhicules ferroviaires comportant de tels dispositifs.

### Etat de la technique

Les véhicules ferroviaires sont généralement équipés de cylindres de frein de service comportant un piston de frein de service qui est mobile sous l'effet d'un fluide sous pression, le déplacement de ce piston entraînant une action de freinage telle que le serrage d'un disque de frein entre deux garnitures, ou la pression directe d'une semelle contre une roue du véhicule. Ces cylindres de frein comportent également généralement un frein de parking ou de secours qui est activé par exemple en cas de perte de pression du fluide sous pression et/ou en cas de vidange volontaire ou de fuite du système pneumatique. Ces cylindres sont souvent alimentés par une conduite pneumatique, dite conduite générale, courant le long du véhicule.

De tels systèmes de freinage ferroviaire du type frein de service, frein de parking et/ou frein d'urgence sont actionnés et commandés par un conducteur du véhicule ferroviaire, grâce à des dispositifs d'actionnement dédiés qui sont disposés sur un tableau de bord du véhicule et qui peuvent par exemple être mécaniques et/ou électriques.

Il existe des dispositifs d'actionnement, aussi appelés manipulateurs de frein, qui sont conçus pour faire fonctionner les freins dits indirects des véhicules ferroviaires et pour contrôler la conduite générale en cas d'urgence par exemple lorsque le dispositif d'actionnement normal du frein de service tombe en panne.

De tels manipulateurs peuvent comporter cinq positions, dont une position centrale neutre, deux positions de freinage en amont de la position centrale neutre et deux positions de dé-freinage en aval de la position centrale neutre, c'est-à-dire à l'opposé des deux positions de freinage.

Le manipulateur peut comporter une première position de freinage et une première position de dé-freinage qui permettent respectivement de freiner et dé-freiner le véhicule de manière progressive, tant que le conducteur maintient la première position respective.

Lorsque le conducteur actionne le manipulateur vers l'une des premières positions respectives de freinage et dé-freinage, un premier clapet de freinage ou de dé-freinage est déplacé par un mécanisme, formant ainsi un premier chemin fluidique de vidange ou d'alimentation, respectivement pour le freinage progressif et le dé-freinage progressif, pour la circulation d'un agent pneumatique.

Le manipulateur peut en outre comporter une seconde position de freinage et une seconde position de dé-freinage qui permettent respectivement de freiner et dé-freiner le véhicule très rapidement.

Lorsque le conducteur actionne le manipulateur vers l'une des secondes positions respectives de freinage et dé-freinage, un second clapet de freinage ou de dé-freinage, qui est monté en série avec le premier clapet respectif, est déplacé par ce premier clapet qui est lui-même déplacé par le mécanisme, formant ainsi un second chemin fluidique de vidange ou d'alimentation, respectivement pour le freinage rapide et le dé-freinage rapide, pour la circulation de l'agent pneumatique. A noter que le second chemin fluidique présente une section de passage de l'agent pneumatique plus importante que celle du premier chemin fluidique.

La demande de brevet allemand DE 27 25 948 décrit un dispositif d'actionnement ayant un levier de commande agissant sur des valves par l'intermédiaire d'une unique came. Parmi les valves, il y a une valve principale connectée à un cylindre de frein à ressorts, une valve de sécurité utile à certaines utilisations dont frein de secours, immobilisation et test, ainsi qu'une valve reliée à une autre valve dite direct-direct-inverse. Il est également prévu dans ce dispositif des ressorts assurant le rappel du levier dans certaines positions prédéterminées

### Exposé de l'invention

L'invention concerne un dispositif d'actionnement, du type manipulateur, prévu pour commander un système de freinage pour véhicule ferroviaire, présentant des performances améliorées par rapport au manipulateur de l'art antérieur susmentionné, tout en étant simple, commode et économique.

L'invention a ainsi pour objet, sous un premier aspect, un dispositif d'actionnement d'un système de freinage ferroviaire pour véhicule ferroviaire à freins à au moins une garniture ou à au moins une semelle, conforme au libellé de la revendication 1.

L'utilisation d'une roue à came qui est mobile en rotation et qui est pourvue d'un profil prédéterminé sur une face de contact a l'avantage d'offrir une indexation précise des différentes positions du dispositif d'actionnement.

Des caractéristiques préférées, simples, commodes et économiques du dispositif selon l'invention sont présentées ci-après.

Ledit profil prédéterminé de ladite face de contact de ladite au moins une roue à came peut présenter au moins une bosse et au moins un creux qui sont prévus respectivement pour ouvrir et pour fermer lesdits clapets de freinage et/ou de dé-freinage.

Ladite au moins une roue à came peut être pourvue d'une butée angulaire pour limiter la rotation de ladite au moins une roue à came dans les deux sens de déplacement en rotation.

Le dispositif peut comporter un mécanisme de rétroaction configuré pour agir sur ladite au moins une roue à came lorsqu'elle est déplacée en rotation depuis une position neutre vers une position de freinage ou de dé-freinage, soit pour la rappeler dans sa position neutre, soit pour la maintenir dans sa position de freinage ou de dé-freinage.

Ledit mécanisme de rétroaction peut comporter un organe de rappel sollicitant un organe d'appui configuré pour venir au contact d'une face de rétroaction de ladite au moins une roue à came, ladite face de rétroaction ayant un profil complémentaire prédéterminé permettant le rappel ou le maintien de ladite au moins une roue à came respectivement dans sa position neutre ou dans sa position de freinage ou de dé-freinage.

Ledit mécanisme de rétroaction peut comporter un bouchon et une bague entre lesquels est interposé ledit organe de rappel, lequel peut être formé par un ressort qui est en appui contre ledit bouchon et sur un premier côté de ladite bague, et ledit organe d'appui peut être formé par une bille, ou un palier, partiellement logée sur un second côté de ladite bague, opposé à son premier côté.

Ledit profil complémentaire prédéterminé de ladite face de rétroaction de ladite au moins une roue à came peut présenter au moins une paroi en rampe et au moins un creux qui sont prévus respectivement pour rappeler et pour maintenir ladite au moins une roue à came respectivement dans sa position neutre ou dans sa position de freinage ou de dé-freinage.

Ladite face de contact peut être formée sur une paroi frontale de ladite au moins une roue à came et ladite face de rétroaction peut être formée sur une paroi de contour de ladite au moins une roue à came, laquelle paroi de contour relie ladite paroi frontale à une paroi arrière de ladite au moins une roue à came qui est opposée à ladite paroi frontale.

Chaque dit clapet de freinage et/ou chaque dit clapet de dé-freinage dudit mécanisme à clapets peut être formé par un organe de poussée, un bouchon situé à l'opposé dudit organe de poussée, une tige de piston pourvue, à une première extrémité, d'un premier logement prévu pour former un siège pour ledit organe de poussée et pourvue, à une deuxième extrémité opposée à ladite première extrémité, d'un deuxième logement prévu pour recevoir au moins partiellement un organe de rappel, ladite tige de piston étant interposée entre ledit organe de poussée et ledit bouchon.

Ledit mécanisme à clapets peut être configuré pour que, sans sollicitation extérieure, ledit organe de rappel appuie sur ladite tige de piston du côté de sa deuxième extrémité et écarte ladite tige de piston dudit bouchon, fermant ainsi ledit clapet de freinage ou de dé-freinage, et aussi pour que, lorsque ladite au moins une roue à came appuie sur ledit organe de poussée, ce dernier déplace ladite tige de piston à l'encontre dudit organe de rappel et la rapproche dudit bouchon en s'écartant d'un siège d'ouverture/fermeture situé autour de ladite tige de poussée entre ledit bouchon et ledit organe de poussée, ouvrant ainsi ledit clapet de freinage ou de dé-freinage.

Le dispositif peut comporter des canaux de freinage et des canaux de dé-freinage et l'ouverture dudit clapet de freinage, respectivement de dé-freinage, met en communication fluidique lesdits canaux de freinage, respectivement de dé-freinage, et la fermeture dudit clapet de freinage, respectivement de dé-freinage, interrompt la communication fluidique entre lesdits canaux de freinage, respectivement de dé-freinage.

Le dispositif peut comporter un corps dans lequel est logé ledit mécanisme à clapets et ledit mécanisme de commande, ainsi qu'un levier de commande assujetti mécaniquement audit mécanisme de commande et pouvant être mis dans une pluralité de positions sélectionnables.

Ledit mécanisme de commande peut comporter un support de levier sur lequel est assujetti mécaniquement ledit levier de commande et au moins un axe d'entraînement assujetti mécaniquement par une première extrémité audit support de levier et par une deuxième extrémité, opposée à ladite première extrémité, à ladite au moins une roue à came.

Ledit mécanisme de commande peut comporter un flasque qui est monté libre sur ledit au moins un axe d'entraînement, qui est interposé entre ledit support de levier et ladite au moins une roue à came, et qui est assujetti mécaniquement audit corps dudit dispositif pour assurer l'étanchéité entre ledit support de levier et ladite au moins une roue à came.

L'invention a aussi pour objet, sous un deuxième aspect, un véhicule ferroviaire à freins à au moins une garniture ou à au moins une semelle, comportant au moins un système de freinage ferroviaire configuré pour agir sur ladite au moins une garniture ou à au moins une semelle dudit véhicule ferroviaire, ainsi qu'un dispositif d'actionnement tel que décrit ci-dessus.

### Brève description des figures

On va maintenant poursuivre l'exposé de l'invention par la description d'exemples de réalisation, donnée ci-après à titre illustratif et non limitatif, en référence aux dessins annexés.
La figure 1 illustre schématiquement et partiellement un véhicule ferroviaire pourvu d'un système de freinage et d'un dispositif d'actionnement configuré pour commander le système de freinage.
La figure 2 est une vue en perspective isolée du dispositif d'actionnement.
La figure 3 est une vue similaire à celle de la figure 2, avec un boitier du dispositif d'actionnement qui est illustré en transparence.
La figure 4 est une vue similaire à celle de la figure 3, prise selon un angle de vue différent.
La figure 5 est une vue similaire à celles des figures 3 et 4, prise selon un angle de vue différent.
La figure 6 est une vue de face du dispositif d'actionnement de la figure 2.
La figure 7 est une vue de dessous du dispositif d'actionnement de la figure 2.
La figure 8 est une vue en coupe repérée VIII-VIII su la figure 6.
La figure 9 est une en coupe repérée IX-IX sur la figure 8.
La figure 10 est une en coupe repérée X-X sur la figure 8.
La figure 11 est une vue en coupe repérée XI-XI sur la figure 9.
La figure 12 montre en perspective éclatée un mécanisme de rétroaction du dispositif d'actionnement de la figure 2, lequel dispositif est visible seulement partiellement.
La figure 13 montre en perspective partiellement éclatée un mécanisme de commande du dispositif d'actionnement de la figure 2, lequel dispositif est visible seulement partiellement.
La figure 14 montre en perspective éclatée différents composants du mécanisme de commande illustré sur la figure 13, dont notamment un support de levier, un axe d'entraînement, un flasque et une roue à came.
La figure 15 montre plus en détail le support de levier et l'axe d'entraînement visibles sur la figure 14.
La figure 16 montre plus en détail le flasque visible sur la figure 14.
La figure 17 est une vue de détail et en perspective de la roue à came visible sur la figure 14.
La figure 18 est une vue similaire à celle de la figure 17, prise selon un angle de vue différent.
La figure 19 est une vue de face de la roue à came visible sur les figures 14, 17 et 18.
La figure 20 est une vue de derrière de la roue à came visible sur les figures 14 et 17 à 19.
La figure 21 est une vue en coupe repérée XXI-XXI sur la figure 19.
La figure 22 est une vue en coupe repérée XXII-XXII sur la figure 19.
La figure 23 montre en perspective éclatée un mécanisme à clapets du dispositif d'actionnement de la figure 2.
La figure 24 montre plus en détail un bouchon du mécanisme à clapets visible sur la figure 23.
La figure 25 montre plus en détail une tige de piston du mécanisme à clapets visible sur la figure 23.
La figure 26 est une vue similaire à celle de la figure 6, montrant un levier du dispositif d'actionnement dans cinq positions différentes.
La figure 27 montre partiellement en perspective et de manière isolée, la coopération entre le mécanisme à clapets, le mécanisme de commande et le mécanisme de rétroaction, dans une position de neutre du levier du dispositif d'actionnement.
La figure 28 est une vue similaire à celle de la figure 27, dans une première position de freinage du levier du dispositif d'actionnement.
La figure 29 est une vue similaire à celles des figures 27 et 28, dans une deuxième position de freinage du levier du dispositif d'actionnement.
La figure 30 est une vue similaire à celles des figures 27 à 29, dans une première position de dé-freinage du levier du dispositif d'actionnement.
La figure 31 est une vue similaire à celles des figures 27 à 30, dans une deuxième position de dé-freinage du levier du dispositif d'actionnement.

### Description détaillée

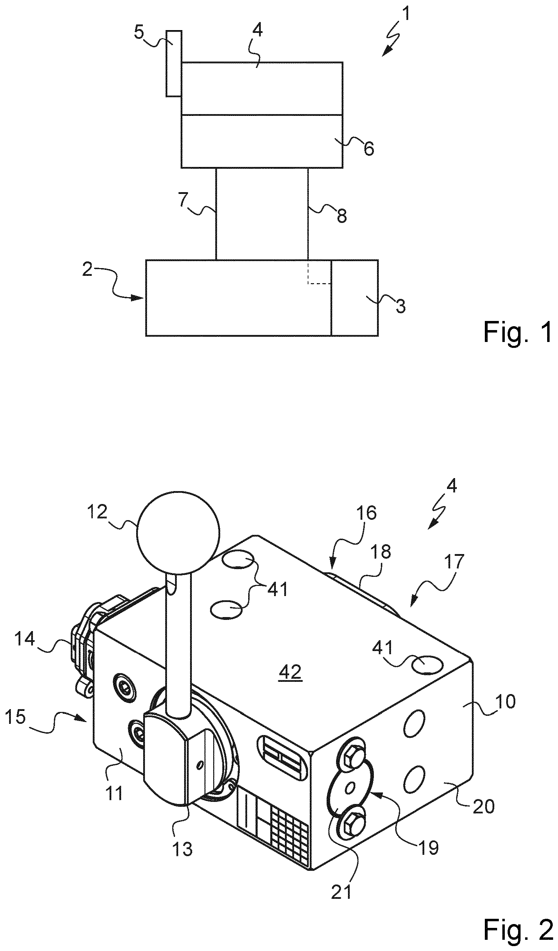

La figure 1 représente très schématiquement un véhicule ferroviaire 1 à frein à garnitures ou à semelles, pourvu d'un système de freinage ferroviaire 2 comportant notamment des cylindres de frein de service 3 prévus pour agir sur les garnitures ou les semelles.

Le véhicule ferroviaire 1 comporte en outre un dispositif d'actionnement 4, appelé ci-après manipulateur, configuré pour commander via un levier 5 du manipulateur 4 le système de freinage ferroviaire 2 et ses cylindres de frein de service 3 en vue de freiner et/ou de dé-freiner le véhicule ferroviaire 1.

Le manipulateur 4 et le système de freinage ferroviaire 2 sont des éléments d'une installation de freinage ferroviaire du véhicule 1. Le manipulateur 4 est ici fixé sur un support 6 formant une interface de distribution entre le manipulateur 4 et le système de freinage ferroviaire 2.

L'installation est ici pneumatique et comporte dans l'exemple décrit une conduite principale 7 qui est par exemple raccordée en entrée du manipulateur 4 et configurée pour alimenter ce dernier en un agent pneumatique, ainsi qu'une conduite générale 8 qui est par exemple raccordée en sortie du manipulateur 4 et configurée pour alimenter le système de freinage ferroviaire 2 en cet agent pneumatique.

En référence à la figure 2, le manipulateur 4 comporte un corps 10 ayant par exemple une forme sensiblement parallélépipédique.

Le manipulateur 4 comporte un mécanisme de commande 13 qui saille partiellement d'une face frontale 11 du corps 10, ainsi qu'un levier de commande 12 assujetti mécaniquement au mécanisme de commande 13.

Le levier de commande 12 est actionnable par un utilisateur et peut être mis dans une pluralité de positions sélectionnables.

Le manipulateur 4 comporte en outre un système de connexion électrique 14 qui saille partiellement d'une première face latérale 15 du corps 10.

Le manipulateur 4 comporte en outre un mécanisme à clapets 16 logé à l'intérieur du corps 10 et dont l'accès est possible via une trappe 18 fixée sur une face arrière 17 du corps 10 qui est opposée à sa face frontale 11.

Le manipulateur 4 comporte en outre un mécanisme de rétroaction 19 monté à l'intérieur du corps 10 et dont l'accès est possible via un bouchon 21 logé dans une deuxième face latérale 20 du corps 10 qui est opposée à sa première face latérale 15.

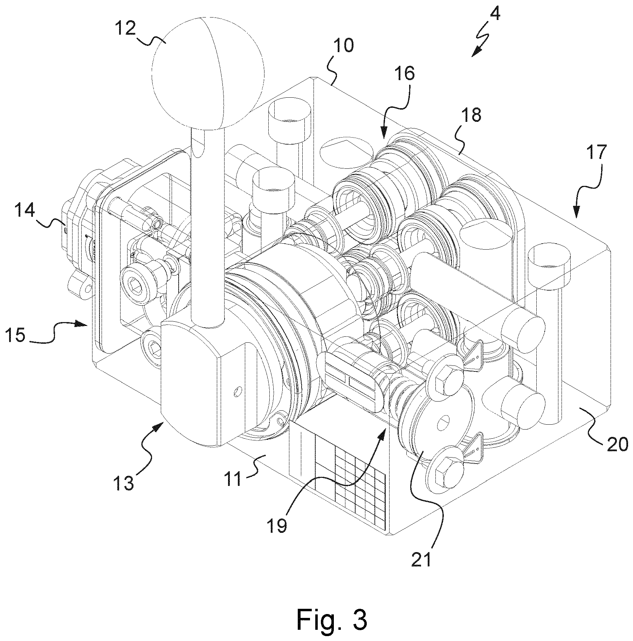

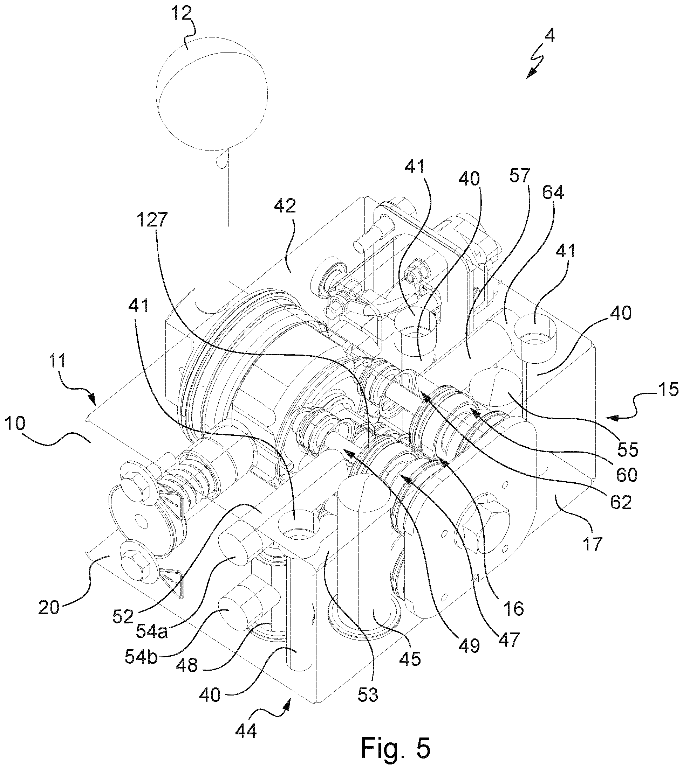

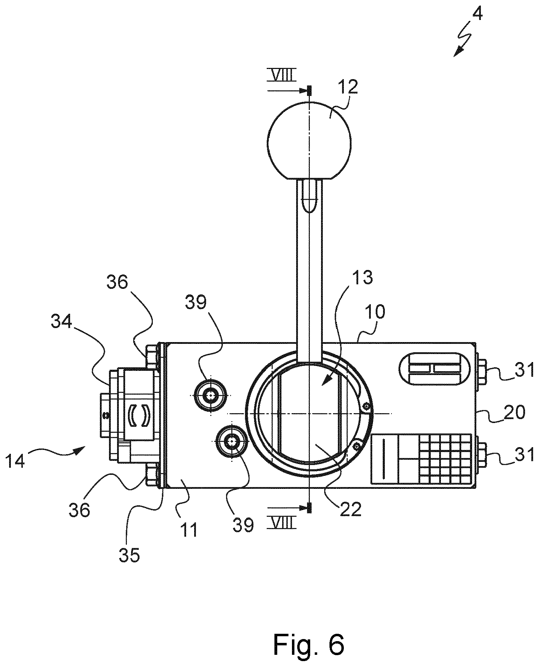

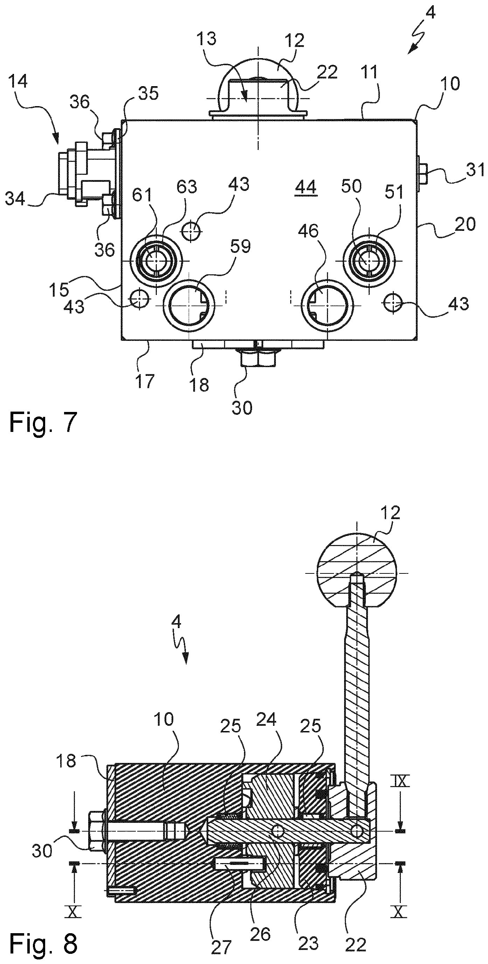

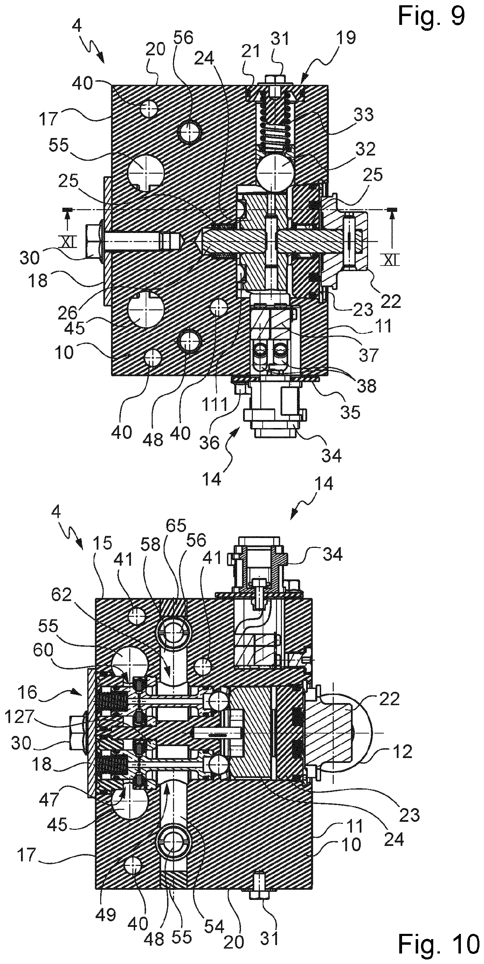

En référence aux figures 3 à 11, on va décrire l'agencement du mécanisme de commande 13, du système de connexion électrique 14, du mécanisme à clapets 16 et du mécanisme de rétroaction 19 dans et par rapport au corps 10, ainsi que différents canaux et alésages ménagés dans le corps 10 du manipulateur 4.

Le mécanisme de commande 13 comporte un support de levier 22 auquel est assujetti mécaniquement le levier 12.

Le support de levier 22 est disposé en saillie de la face frontale 11 du corps 10.

Le mécanisme de commande 13 comporte en outre un flasque 23 et une roue à came 24 qui sont logés à l'intérieur du corps 10.

Le flasque 23 est ici interposé entre le support de levier 22 et la roue à came 24 et est assujetti mécaniquement au corps 10.

Le flasque 23 forme une entretoise entre le support de levier 22 et la roue à came 24 et assure une fonction d'étanchéité notamment entre le support de levier 22 et la roue à came 24 et aussi entre le corps 10 et son environnement.

Le support de levier 22, le flasque 23 et la roue à came 24 sont montés sur un axe d'entraînement 26 du mécanisme de commande 13 et s'étendent depuis la face frontale 11 du corps 10 vers sa face arrière 17.

Le support de levier 22 est assujetti mécaniquement à une première extrémité de l'axe d'entraînement 26.

Le flasque 23 est monté libre sur l'axe d'entraînement 26.

La roue à came 24 est assujettie mécaniquement à une deuxième extrémité de l'axe d'entraînement 26, opposée à la première extrémité.

L'axe d'entraînement 26 est mobile en rotation dans le corps 10 et est actionné par le support de levier 22 lui-même entraîné en rotation par l'actionnement du levier 12.

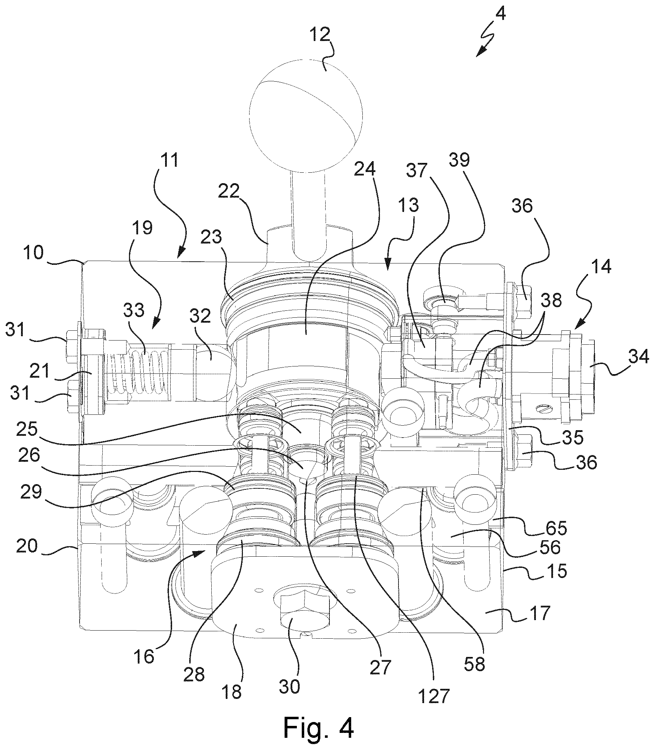

L'axe d'entraînement 26 est monté dans des roulements à aiguilles 25 qui sont logés dans le corps 10 et dans le flasque 23 (figures 4, 8 et 9).

Le manipulateur 4 comporte un doigt de butée 27 logé fixement dans le corps 10, au niveau de la deuxième extrémité de l'axe d'entraînement 26.

Ce doigt de butée 27 est partiellement introduit dans une ouverture ménagée dans la roue à came 24 (voir ci-après) de sorte à former une butée angulaire pour limiter la rotation de la roue à came 24 dans les deux sens de déplacement en rotation de cette roue à came 24.

Le mécanisme à clapets 16 comporte ici quatre clapets qui sont chacun pourvus d'un bouchon 28 disposé contre une surface interne de la face arrière 17 du corps 10, du côté de la trappe 18 qui est fixée sur la face arrière 17 du corps 10 par exemple à l'aide d'une vis 30, d'un siège d'ouverture/fermeture 127 du clapet situé contre un épaulement ménagé dans le corps 10 et sensiblement en regard du bouchon 28, d'un organe de poussée 111 en appui contre la roue à came 24, à l'opposé du bouchon 28, et d'une tige de piston 29 qui s'étend longitudinalement entre le bouchon 28 respectif et le siège 127 d'ouverture/fermeture respectif et entre ce siège 127 et la roue à came 24 du mécanisme de commande 13. Le siège d'ouverture/fermeture 127 du clapet est situé autour de la tige de poussée 111.

Chacun des quatre clapets du mécanisme à clapets 16 est agencé de sorte à se trouver en regard de la roue à came 24.

Dans l'exemple décrit, l'ensemble formé du mécanisme de commande 13 et du mécanisme à clapets 16 est agencé selon la direction face frontale 11 face arrière 17 du corps 10 du manipulateur 4.

Le mécanisme de rétroaction 19 est disposé à l'intérieur du corps 10, transversalement à la direction face frontale 11 face arrière 17 du corps 10 du manipulateur 4.

En particulier, le mécanisme de rétroaction 19 s'étend depuis la deuxième face latérale 20 du corps 10, au niveau de laquelle est fixement maintenu son bouchon 21 par exemple par l'intermédiaire de vis 31, jusqu'à entrer au contact avec la roue à came 24 du mécanisme de commande 13 par l'intermédiaire d'un organe d'appui 32, lequel est sollicité par un organe de rappel 33 du mécanisme de rétroaction 19 qui est interposé entre l'organe d'appui 32 et le bouchon 21.

Le système de connexion électrique 14 est disposé au moins partiellement à l'intérieur du corps 10, transversalement à la direction face frontale 11 face arrière 17 du corps 10 du manipulateur 4, et à l'opposé du mécanisme de rétroaction 19.

Le système de connexion électrique 14 comporte un bornier 34 monté sur une embase 35 qui est fixée par exemple à l'aide de vis 36 sur la première face latérale 15 du corps 10.

Le système de connexion électrique 14 comporte en outre un organe de commutation 37 fixé à l'intérieur du corps 10 par l'intermédiaire par exemple des vis 39 insérées dans le corps 10 du côté de la face frontale 11.

L'organe de commutation 37 est agencé entre la roue à came 24 et le bornier 34.

L'organe de commutation 37 est pourvu d'une ou de plusieurs pattes de connexion avec lesquelles la roue à came 24 est configurée pour entrer en contact en fonction de la position du levier 12, de câbles de connexion raccordant électriquement l'organe de commutation 37 avec le bornier 34.

Ainsi qu'illustré en particulier sur les figures 4, 5, 10 et 11, le manipulateur 4 est pourvu d'alésages de montage 40, ici par exemple au nombre de trois, formés dans le corps 10 et prévus pour recevoir des vis de fixation pour le montage du manipulateur 4 sur le support 6 formant l'interface de distribution entre le manipulateur 4 et le système de freinage ferroviaire 2.

Ces alésages de montage 40 débouchent à une première extrémité 41 au niveau d'une face de dessus 42 du corps 10 et, à une seconde extrémité 43 opposée à la première extrémité 41, au niveau d'une face de dessous 44 du corps 10, opposée à sa face de dessus 42.

Le manipulateur 4 est en outre pourvu de canaux de freinage, dont un premier canal principal de freinage 45, un deuxième canal principal de freinage 48 et deux canaux secondaires de freinage 52 et 53.

Le premier canal principal de freinage 45 s'étend depuis un premier orifice 46 débouchant au niveau de la face de dessous 44 du corps 10 vers la face de dessus 42 du corps 10, et relie deux entrées de clapets 47 du mécanisme à clapets 16.

Le deuxième canal principal de freinage 48 s'étend depuis un deuxième orifice 50 débouchant au niveau de la face de dessous 44 du corps 10 vers la face de dessus 42 du corps 10, et relie deux sorties de clapets 49 du mécanisme à clapets 16.

Une tuyère 51 peut par exemple être introduite dans le deuxième orifice 50 du deuxième canal principal de freinage 48.

Les deux entrées de clapets 47 du mécanisme à clapets 16 sont reliées directement par le premier canal principal de freinage 45 ; tandis que les deux sorties de clapets 49 du mécanisme à clapets 16 sont reliées indirectement par le deuxième canal principal de freinage 48, via les deux canaux secondaires de freinage 52 et 53.

Le premier canal principal de freinage 45 et le deuxième canal principal de freinage 48 sont par exemple borgnes à l'opposé des premier et deuxième orifices 46 et 50 respectifs.

Le canal secondaire de freinage 52 s'étend depuis un orifice 54a bouché au niveau de la deuxième face latérale 20 du corps 10 et rejoint une sortie de clapet 49 du mécanisme à clapets 16 ; tandis que le canal secondaire de freinage 53 s'étend depuis un orifice 54b bouché au niveau de la deuxième face latérale 20 du corps 10 et rejoint une autre sortie de clapet 49 du mécanisme à clapets 16.

Le deuxième canal principal de freinage 48 communique avec chacun des canaux secondaires de freinage 52 et 53.

Le manipulateur 4 est en outre pourvu de canaux de dé-freinage, dont un premier canal principal de dé-freinage 55, un deuxième canal principal de dé-freinage 56 et deux canaux secondaires de dé-freinage 57 et 58.

Le premier canal principal de dé-freinage 55 s'étend depuis un premier orifice 59 débouchant au niveau de la face de dessous 44 du corps 10 vers la face de dessus 42 du corps 10, et relie deux entrées de clapets 60 du mécanisme à clapets 16.

Le deuxième canal principal de dé-freinage 56 s'étend depuis un deuxième orifice 61 débouchant au niveau de la face de dessous 44 du corps 10 vers la face de dessus 42 du corps 10, et relie deux sorties de clapets 62 du mécanisme à clapets 16.

Une tuyère 63 peut par exemple être introduite dans le deuxième orifice 61 du deuxième canal principal de dé-freinage 56.

Les deux entrées de clapets 60 du mécanisme à clapets 16 sont reliées directement par le premier canal principal de dé-freinage 55 ; tandis que les deux sorties de clapets 62 du mécanisme à clapets 16 sont reliées indirectement par le deuxième canal principal de dé-freinage 56, via les deux canaux secondaires de dé-freinage 57 et 58.

Le premier canal principal de dé-freinage 55 et le deuxième canal principal de dé-freinage 56 sont par exemple borgnes à l'opposé des premier et deuxième orifices 59 et 61 respectifs.

Le canal secondaire de dé-freinage 57 s'étend depuis un orifice 64 bouché au niveau de la première face latérale 15 du corps 10 et rejoint une sortie de clapet 62 du mécanisme à clapets 16 ; tandis que le canal secondaire de dé-freinage 58 s'étend depuis un orifice 65 bouché au niveau de la première face latérale 15 du corps 10 et rejoint une autre sortie de clapet 62 du mécanisme à clapets 16.

Le deuxième canal principal de dé-freinage 56 communique avec chacun des canaux secondaires de dé-freinage 57 et 58.

Dans l'exemple décrit, les entrées de clapets 47 et 60 sont situées entre les bouchons 28 et les tiges de piston 29 respectifs des clapets du mécanisme à clapets 16 ; tandis que les sorties de clapets 49 et 62 sont situées au niveau des tiges de piston 29 respectives des clapets du mécanisme à clapets 16.

En variante, les entrées de clapets pourraient être situées au niveau des tiges de piston respectives des clapets du mécanisme à clapets ; tandis que les sorties de clapets pourraient être situées entre les bouchons et les tiges de piston respectifs des clapets du mécanisme à clapets.

Dans l'exemple décrit, le mécanisme à clapets 16 comporte deux clapets dédiés au freinage et deux autres clapets dédiés au dé-freinage (voir ci-après), les clapets dédiés au freinage, respectivement au dé-freinage, étant ici disposés de manière superposée, deux à deux, entre la face de dessous 44 du corps 10 et sa face de dessus 42.

En variante, les clapets dédiés au freinage, respectivement au dé-freinage, pourraient plutôt être disposés de manière juxtaposée, deux à deux, entre les première et deuxième faces latérales du corps.

En variante encore, le mécanisme à clapets pourrait comporter plus ou moins de clapets dédiés au freinage, respectivement au dé-freinage, leur nombre pouvant être égal ou différent et leur position pouvant être superposée, juxtaposée ou bien alternée.

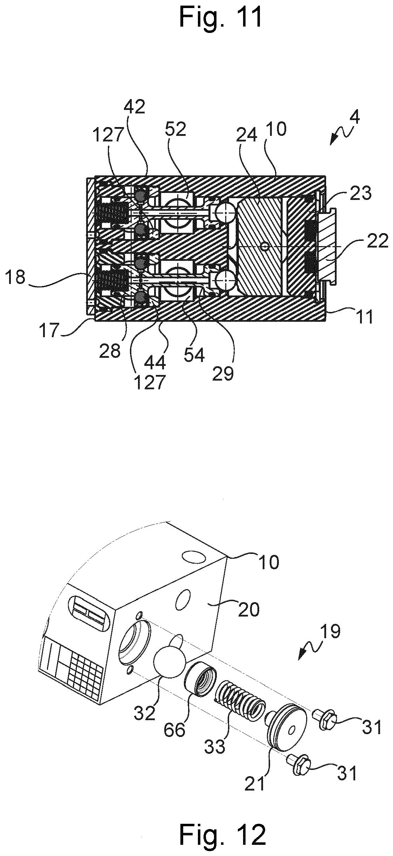

On va maintenant décrire plus en détail le mécanisme de rétroaction 19 en référence à la figure 12.

Le mécanisme de rétroaction 19 est maintenu dans le corps 10 par les vis 31 fixées dans la deuxième face latérale 20.

Le mécanisme de rétroaction 19 est configuré pour agir sur la roue à came 24 lorsqu'elle est déplacée en rotation depuis une position neutre vers une ou plusieurs positions de freinage ou de dé-freinage, soit pour la rappeler dans sa position neutre, soit pour la maintenir dans ses positions de freinage ou de dé-freinage respectives.

En particulier, l'organe de rappel 33 sollicite l'organe d'appui 32 pour venir au contact d'une face de rétroaction de la roue à came 24 (voir ci-après).

L'organe d'appui 32 est ici formé par une bille et l'organe de rappel 33 est formé par un ressort.

L'organe de rappel est interposé entre une bague 66 et le bouchon 21.

La bague 66 porte sur un premier côté l'organe d'appui 32 et sur un deuxième côté opposé au premier côté l'organe de rappel 33 par une extrémité de ce dernier.

Le bouchon 21 porte aussi l'organe de rappel 33 par une extrémité opposée de ce dernier.

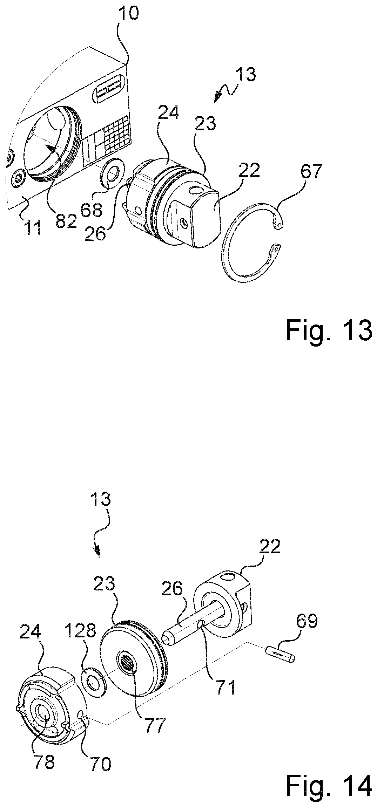

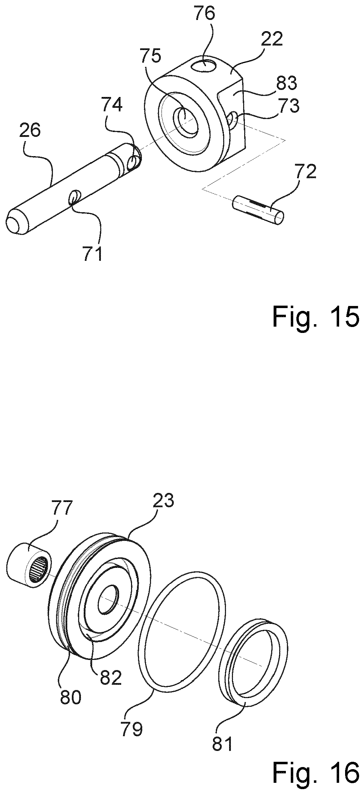

On va maintenant décrire plus en détail le mécanisme de commande 13 en référence d'abord aux figures 13 à 16.

L'ensemble formé du support de levier 22, du flasque 23, de la roue à came 24 et de l'axe d'entraînement 26 sur lequel sont montés les éléments précités, est disposé dans un logement 82 dédié du corps 10 qui débouche dans la face frontale 11.

Une première rondelle d'appui 68 peut être introduite dans le logement 82, en regard de la douille à aiguilles 25 visible sur la figure 4, et l'ensemble susmentionné est introduit dans le logement 82 avec la roue à came 24 qui vient en butée contre la première rondelle d'appui 68 et l'axe d'entraînement 26 qui traverse cette première rondelle d'appui 68.

Un circlips 67 est par exemple monté contre le flasque 23, autour du support de levier 22, et assujetti mécaniquement dans le corps 10.

Une deuxième rondelle d'appui 128 est montée sur l'axe d'entraînement 26 et interposée entre la roue à came 24 et le flasque 23.

L'axe d'entraînement 26 passe au travers d'une douille à aiguilles 77 logée dans une ouverture centrale du flasque 23 de sorte que l'axe d'entraînement 26 est mobile en rotation par rapport au flasque 23.

L'axe d'entraînement 26 peut être pourvu d'un premier orifice de montage 71.

L'axe d'entraînement 26 passe aussi au travers d'une ouverture centrale 78 de la roue à came 24 jusqu'à ce que son premier orifice de montage 71 se trouve en regard d'un premier orifice de montage complémentaire 70 ménagé dans la roue à came 24.

Une première goupille de montage 69 peut être introduite dans les premier orifice de montage 71 et premier orifice de montage complémentaire 70 respectivement de l'axe d'entraînement 26 et de la roue à came 24 pour leur assujettissement mécanique.

L'axe d'entraînement 26 peut être pourvu d'un deuxième orifice de montage 74.

L'axe d'entraînement 26 passe également au travers d'une ouverture centrale 75 du support de levier 22 jusqu'à ce que son deuxième orifice de montage 74 se trouve en regard d'un deuxième orifice de montage complémentaire 73 ménagé par exemple dans un méplat formé sur le support de levier 22.

Une deuxième goupille de montage 72 peut être introduite dans les deuxième orifice de montage 74 et deuxième orifice de montage complémentaire 73 respectivement de l'axe d'entraînement 26 et du support de levier 22 pour leur assujettissement mécanique.

Le flasque 23 peut être pourvu d'une rainure 80 sur son contour dans laquelle est par exemple logé un joint torique 79 pour assurer l'étanchéité du corps 10 au niveau du logement 82.

Le flasque 23 peut être pourvu d'une gorge annulaire 82 ménagée sur une face frontale du flasque 23 et dans laquelle est par exemple logé un joint à lèvre 81 pour assurer l'étanchéité entre le support de levier 22 et la roue à came 24, tout en permettant la rotation du support de levier 22 par rapport au flasque 23.

Un contact par friction peut s'établir au niveau du joint à lèvre 81 et du support de levier 22 lorsque ce dernier est entraîné en rotation.

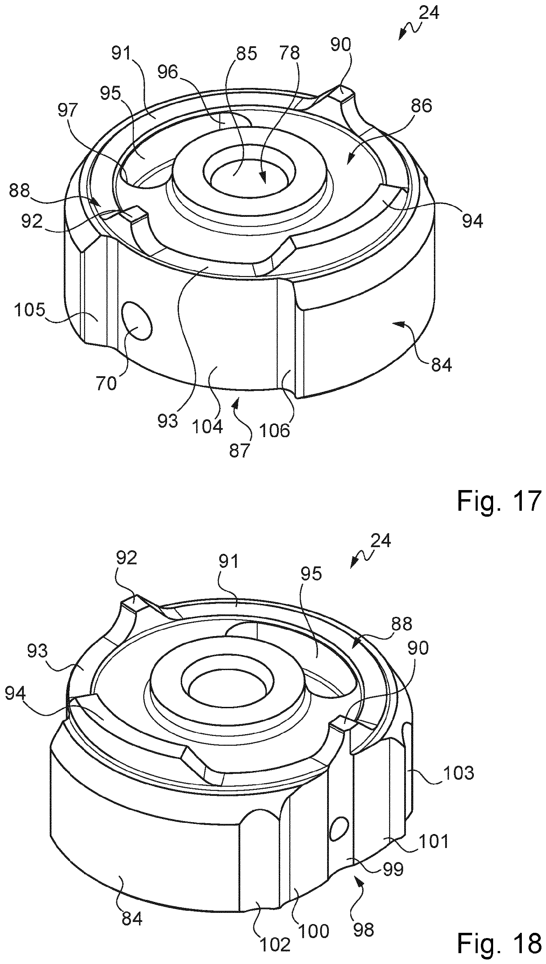

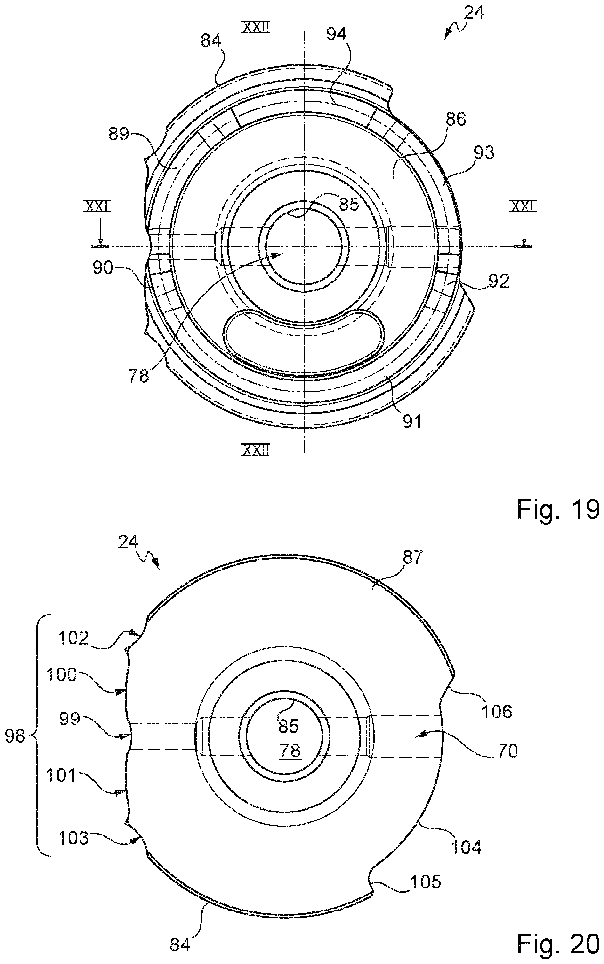

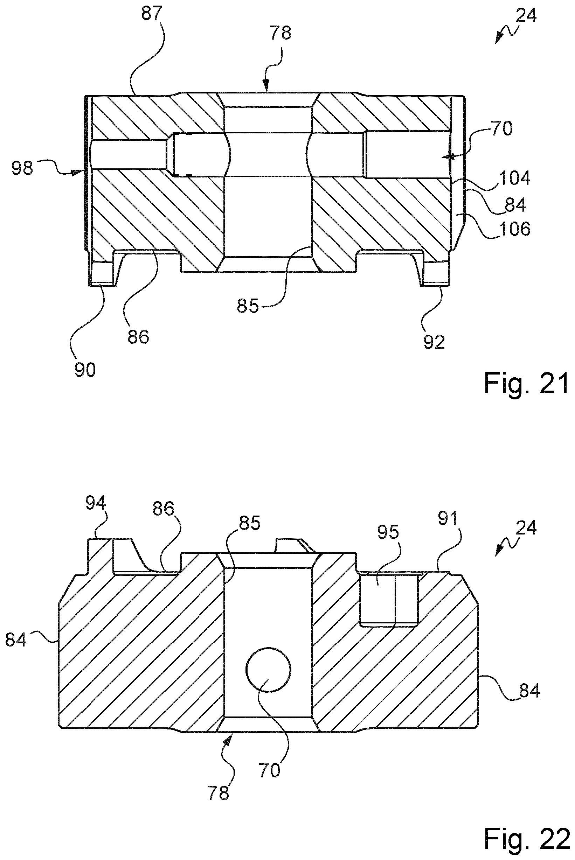

On va maintenant décrire plus en détail la roue à came 24 du mécanisme de commande 13 en référence aux figures 17 à 22.

La roue à came 24 présente ici une forme globalement cylindrique, ayant un contour externe 84, aussi appelée paroi de contour, un contour interne 85 défini par son ouverture centrale 78, une première paroi de côté dite paroi frontale 86, ainsi qu'une seconde paroi de côté dite paroi arrière 87, opposée à la première paroi de côté ou paroi frontale 86.

L'ouverture centrale 78 débouche de part et d'autre des parois frontale et arrière 86 et 87.

Le contour externe 84 relie la paroi frontale 86 à la paroi arrière 87.

La roue à came 24 est pourvue d'une face de contact 88 ménagée sur la paroi frontale 86.

La face de contact 88 est par exemple ménagée en périphérie de la paroi frontale 86.

La face de contact 88 est configurée pour agir directement sur les clapets de freinage et de dé-freinage du mécanisme à clapets 16, en fonction du sens de déplacement en rotation et d'un angle de déplacement en rotation de la roue à came 24.

La face de contact 88 présente pour cela un profil prédéterminé, ici formé par des creux et des bosses prévus respectivement pour ouvrir et pour fermer les clapets de freinage et/ou de dé-freinage du mécanisme à clapets 16.

Dans l'exemple décrit, le profil prédéterminé de la face de contact 88 est formé par un premier creux 89 de longueur prédéterminée, suivi d'une première bosse 90 de longueur prédéterminée, suivie d'un deuxième creux 91 de longueur prédéterminée, suivi d'une deuxième bosse 92 de longueur prédéterminée, suivie d'un troisième creux 93 de longueur prédéterminée, suivi d'une troisième bosse 94 de longueur prédéterminée, laquelle troisième bosse 94 rejoint le premier creux 89.

En particulier, les première et deuxième bosses 90 et 92 peuvent par exemple être courtes et avoir sensiblement la même longueur prédéterminée, tandis que la troisième bosse 94 peut être par exemple plus longue que les première et deuxième bosses 90 et 92. Les premier et troisième creux 89 et 93 peuvent avoir par exemple la même longueur prédéterminée, laquelle peut être par exemple sensiblement égale à celle de la troisième bosse 94, tandis que le deuxième creux 91 peut être par exemple plus long que les premier et troisième creux 89 et 93.

La roue à came 24 peut être pourvue d'une encoche 95 ménagée dans la paroi frontale 86, entre l'ouverture centrale 78 et la face de contact 88.

L'encoche 95 est configurée pour recevoir le doigt de butée 27 et elle définit deux extrémités opposées 96 et 97 qui forment deux butées angulaires pour ce doigt de butée 27, de sorte à limiter la rotation de la roue à came 24 dans les deux sens de déplacement en rotation.

La roue à came 24 peut être pourvue sur son contour externe 84 d'une face de rétroaction 98 prévue pour coopérer avec l'organe d'appui 32, ou la bille, du mécanisme de rétroaction 19.

La face de rétroaction 98 a un profil complémentaire prédéterminé qui permet le rappel ou le maintien de la roue à came 24 respectivement dans une position neutre ou dans une des positions de freinage et de dé-freinage.

Le profil complémentaire prédéterminé de la face de rétroaction 98 de la roue à came 24 peut présenter par exemple un premier creux 99 de chaque côté duquel s'étend une paroi en rampe 100, 101, suivie chacune par exemple d'un second creux 102, 103.

Le premier creux est par exemple prévu pour maintenir la roue à came 24 dans des positions neutre, de freinage ou de dé-freinage, les parois en rampe 100 et 101 sont par exemple prévues pour rappeler la roue à came 24 dans de tels positions neutre, de freinage ou de dé-freinage ; tandis que les second creux 102 et 103 sont par exemple prévus pour maintenir la roue à came 24 dans d'autres positions de freinage ou dé-freinage.

La roue à came 24 peut aussi être pourvue sur son contour externe 84 d'une face de commutation 104, opposée à la face de rétroaction 98 et prévue pour coopérer avec les pattes de connexion de l'organe de commutation 37 du système de connexion électrique 14.

Cette face de commutation 104 est par exemple délimitée de part et d'autres par des épaulements 105 et 106.

La coopération entre la face de commutation 104 et les pattes de connexion de l'organe de commutation 37 peut permettre d'établir une connexion électrique et ainsi d'envoyer des informations à l'utilisateur, par exemple par l'affichage d'un message visuel ou sonore.

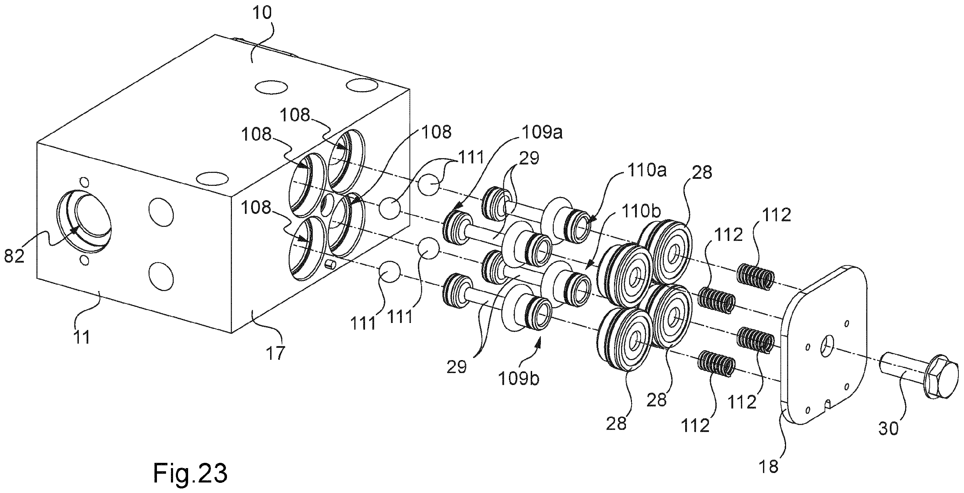

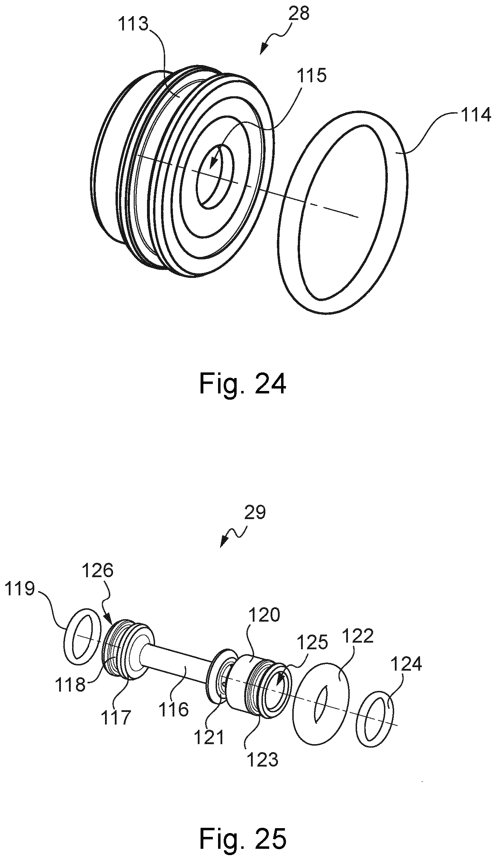

On va maintenant décrire plus en détail le mécanisme à clapets 16 en référence d'abord aux figures 23 à 26.

Ainsi qu'indiqué plus haut, le mécanisme à clapets 16 comporte ici deux clapets de freinage, référencés en particulier 109a et 109b, ainsi que deux clapets de dé-freinage, référencés en particulier 110a et 110b, chacun de ces clapets étant configuré pour être logé dans un logement dédié 108 respectif du corps 10.

Chacun des clapets de freinage et dé-freinage 109a, 109b et 110a, 110b est formé, comme indiqué plus haut également, d'un organe de poussée 111, d'une tige de piston 29 et d'un bouchon 28.

Chaque organe de poussée 111 est par exemple formé par une bille.

Chacun des clapets de freinage et dé-freinage 109a, 109b et 110a, 110b comporte en outre un organe de rappel 112, qui est par exemple un ressort, disposé contre une surface interne de la trappe 18 et s'étendant au travers d'une ouverture centrale 115 d'un bouchon 28 respectif.

Chaque tige de piston 29, ensemble avec l'organe de poussée 111, sont mobiles dans le corps 10, par rapport au bouchon 28 respectif et à la roue à came 24.

Chaque bouchon 28 peut être pourvu d'une rainure 113 sur son contour et dans laquelle est reçue un joint torique 114.

Chaque tige de piston 29 est pourvue d'un axe 116, d'un premier logement 117 à une première extrémité de l'axe 116, et d'un deuxième logement 120 à une deuxième extrémité de l'axe 116 opposée à sa première extrémité.

Le premier logement 117 peut être pourvu d'une rainure 118 sur son contour dans laquelle est disposée un joint torique 119.

Le premier logement 117 est prévu pour former un siège 126 pour l'organe de poussée 111.

Le deuxième logement 120 peut être pourvu d'une gorge 121 et d'une rainure 118 sur son contour dans lesquelles sont respectivement disposés des joints toriques 122 et 124.

Le deuxième logement 120 forme un siège 125 qui est prévu pour recevoir au moins partiellement l'organe de rappel 112.

Les joints toriques 124 et 114 respectivement montés sur les tiges de piston 29 et sur les bouchons 28 permettent d'étancher le mécanisme à clapets 16 avec le corps 10 et la trappe 18 au niveau des logements 108.

Les joints toriques 119 montés sur les tiges de piston 29 permettent d'étancher le mécanisme à clapets 16 avec le mécanisme de commande 13, au niveau de coopération de la roue à came 24, via sa face de contact 88 avec les organes de poussée 111.

Les joints toriques 122 montés sur les tiges de piston 29 sont prévus pour coopérer avec les sièges d'ouverture/fermeture 127 de sorte à ouvrir ou fermer les clapets de freinage ou de dé-freinage 109a-b, 110a-b.

Le mécanisme à clapets 16 est ainsi configuré pour que, sans sollicitation extérieure, l'organe de rappel 112 appuie sur la tige de piston 29 du côté de sa deuxième extrémité et écarte la tige de piston 29 du bouchon 28, fermant ainsi le clapet de freinage ou de dé-freinage 109a-b, 110a-b par l'application des joints toriques 122 des tiges de piston 29 sur les sièges d'ouverture/fermeture 127, et aussi pour que, lorsque la roue à came 24 appuie sur l'organe de poussée 111, ce dernier déplace la tige de piston 29 à l'encontre de l'organe de rappel 112 et la rapproche du bouchon 28, ouvrant ainsi le clapet de freinage ou de dé-freinage 109a-b, 110a-b, avec les joints toriques 122 des tiges de piston 29 qui s'écartent des sièges d'ouverture/fermeture 127.

Les entrées de clapets 47, respectivement 60, sur les clapets de freinage 109a et 109b, respectivement sur les clapets de dé-freinage 110a et 110b, peuvent donc être situées entre les joints toriques 122 montés sur les tiges de piston 29 respectives et les bouchons 28 respectifs ; tandis que les sorties de clapets 49, respectivement 62, sur les clapets de freinage 109a et 109b, respectivement sur les clapets de dé-freinage 110a et 110b, peuvent donc être situées au niveau des axes 116 respectifs, entre les joints toriques 122 et les joints 119 montés sur les tiges de piston 29 respectives.

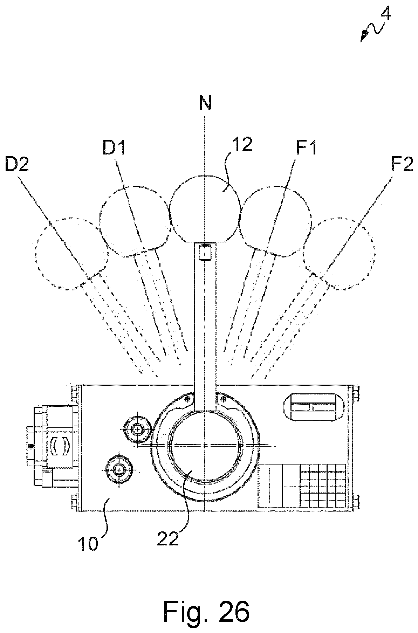

On va maintenant décrire en référence aux figures 26 à 31 le fonctionnement du manipulateur 4, en fonction de la position sélectionnée du levier de commande 12.

Ainsi qu'indiqué plus haut, le levier de commande 12 du manipulateur 4 comporte cinq positions différentes, dont une position centrale neutre repérée N, deux positions de freinage en amont de la position centrale neutre qui sont repérées F1 et F2, et deux positions de dé-freinage en aval de la position centrale neutre qui sont repérées D1 et D2, c'est-à-dire à l'opposé des deux positions de freinage.

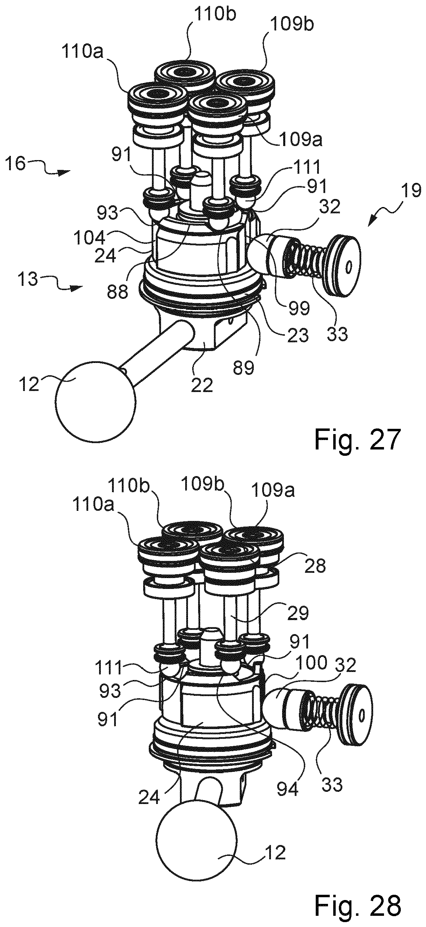

La figure 27 montre la coopération entre le mécanisme à clapets 16, le mécanisme de commande 13 et le mécanisme de rétroaction 19, dans la position centrale neutre N du levier de commande 12.

La roue à came 24 n'ouvre aucun des clapets de freinage 109a-b et de dé-freinage 110a-b, lesquels sont donc tous fermés.

En particulier, les organes de poussée 111 des clapets de freinage 109a et 109b reposent respectivement dans les premier et deuxième creux 89 et 91 de la face de contact 88 de la roue à came 24, tandis que les organes de poussée 111 des clapets de dé-freinage 110a et 110b reposent respectivement dans les deuxième et troisième creux 91 et 93 de la face de contact 88.

Les canaux de freinage (non visibles sur cette figure) sont isolés entre eux et les canaux de dé-freinage (non visibles sur cette figure) sont aussi isolés entre eux.

L'organe d'appui 32 du mécanisme de rétroaction est sollicité par l'organe de rappel 33 et maintenu dans le premier creux 99 de la face de rétroaction 98 de la roue à came 24.

Au surplus, la face de commutation 104 de la roue à came 24 n'actionne pas l'organe de commutation (non visible sur cette figure).

La figure 28 montre la coopération entre le mécanisme à clapets 16, le mécanisme de commande 13 et le mécanisme de rétroaction 19, dans la première position de freinage F1 du levier de commande 12.

La roue à came 24 ouvre le clapet de freinage 109a et maintient fermés les autres clapets de freinage 109b et de dé-freinage 110a-b.

En particulier, l'organe de poussée 111 du clapet de freinage 109a repose sur la troisième bosse 94 de la face de contact 88 et sollicite la tige de piston 29 à l'encontre de l'organe de rappel pour se rapprocher du bouchon 28 et s'écarter du siège d'ouverture/fermeture.

Au contraire, l'organe de poussée 111 du clapet de freinage 109b se trouve dans le deuxième creux 91 de la face de contact 88, et les organes de poussée 111 des clapets de dé-freinage 110a et 110b se trouvent dans les deuxième et troisième creux 91 et 93 de la face de contact 88.

Les premier et deuxième canaux principaux de freinage 45 et 48 (non visibles sur cette figure) sont en communication fluidique par l'intermédiaire d'un des deux canaux secondaires de freinage, le canal 52 (non visible sur cette figure), l'autre étant isolé.

Les canaux de dé-freinage (non visibles sur cette figure) sont isolés entre eux.

L'organe d'appui 32 du mécanisme de rétroaction est sollicité par l'organe de rappel 33 et se trouve au contact de la paroi en rampe 100 de la face de rétroaction 98, de sorte que l'utilisateur doit maintenir le levier de commande 12 pour poursuivre le freinage. Sans l'action de l'utilisateur, le levier de commande 12 est rappelé dans la position neutre N.

Au surplus, la face de commutation 104 de la roue à came 24 n'actionne pas l'organe de commutation 37 (non visible sur cette figure).

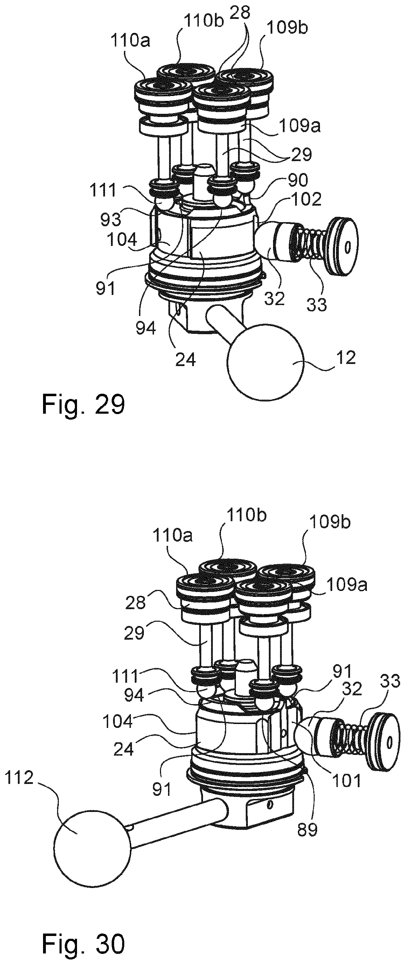

La figure 29 montre la coopération entre le mécanisme à clapets 16, le mécanisme de commande 13 et le mécanisme de rétroaction 19, dans la deuxième position de freinage F2 du levier de commande 12.

La roue à came 24 ouvre les clapets de freinage 109a et 109b et maintient fermés les clapets de dé-freinage 110a-b.

En particulier, l'organe de poussée 111 du clapet de freinage 109a repose sur la troisième bosse 94 de la face de contact 88 et sollicite la tige de piston 29 à l'encontre de l'organe de rappel pour se rapprocher du bouchon 28 et s'écarter du siège d'ouverture/fermeture ; tandis que l'organe de poussée 111 du clapet de freinage 109b repose sur la première bosse 90 de la face de contact 88 et sollicite la tige de piston 29 à l'encontre de l'organe de rappel pour se rapprocher du bouchon 28 et s'écarter du siège d'ouverture/fermeture.

Au contraire, les organes de poussée 111 des clapets de dé-freinage 110a et 110b reposent dans les deuxième et troisième creux 91 et 93 de la face de contact 88.

Les premier et deuxième canaux principaux de freinage 45 et 48 (non visibles sur cette figure) sont en communication fluidique par l'intermédiaire des deux canaux secondaires de freinage 52 et 53.

Ceci permet par exemple un freinage d'urgence du véhicule ferroviaire.

Les canaux de dé-freinage (non visibles sur cette figure) sont isolés entre eux.

L'organe d'appui 32 du mécanisme de rétroaction est sollicité par l'organe de rappel 33 et se trouve maintenu dans le creux 102 de la face de rétroaction 98. Une action de l'utilisateur est nécessaire sur le levier de commande 12 pour le rappeler dans la position neutre N.

Au surplus, la face de commutation 104 de la roue à came 24 actionne l'organe de commutation 37 (non visible sur cette figure).

La figure 30 montre la coopération entre le mécanisme à clapets 16, le mécanisme de commande 13 et le mécanisme de rétroaction 19, dans la première position de dé-freinage D1 du levier de commande 12.

La roue à came 24 ouvre le clapet de dé-freinage 110a et maintient fermés les autres clapets de freinage 109a-b et de dé-freinage 110b.

En particulier, l'organe de poussée 111 du clapet de dé-freinage 110a repose sur la troisième bosse 94 de la face de contact 88 et sollicite la tige de piston 29 à l'encontre de l'organe de rappel pour se rapprocher du bouchon 28 et s'écarter du siège d'ouverture/fermeture.

Au contraire, l'organe de poussée 111 du clapet de dé-freinage 110b se trouve dans le deuxième creux 91 de la face de contact 88, et les organes de poussée 111 des clapets de freinage 109a et 109b se trouvent dans les premier et deuxième creux 89 et 91 de la face de contact 88.

Les premier et deuxième canaux principaux de dé-freinage 55 et 56 (non visibles sur cette figure) sont en communication fluidique par l'intermédiaire d'un des deux canaux secondaires de dé-freinage, le canal 57 (non visible sur cette figure), l'autre étant isolé.

Les canaux de freinage (non visibles sur cette figure) sont isolés entre eux.

L'organe d'appui 32 du mécanisme de rétroaction est sollicité par l'organe de rappel 33 et se trouve au contact de la paroi en rampe 101 de la face de rétroaction 98, de sorte que l'utilisateur doit maintenir le levier de commande 12 pour poursuivre le dé-freinage. Sans l'action de l'utilisateur, le levier de commande 12 est rappelé dans la position neutre N.

Au surplus, la face de commutation 104 de la roue à came 24 n'actionne pas l'organe de commutation 37 (non visible sur cette figure).

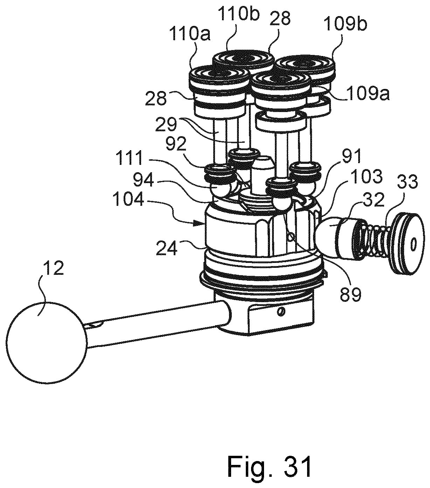

La figure 31 montre la coopération entre le mécanisme à clapets 16, le mécanisme de commande 13 et le mécanisme de rétroaction 19, dans la deuxième position de dé-freinage D2 du levier de commande 12.

La roue à came 24 ouvre les clapets de dé-freinage 110a et 110b tandis qu'elle maintient fermés les clapets de freinage 109a-b.

En particulier, l'organe de poussée 111 du clapet de dé-freinage 110a repose sur la troisième bosse 94 de la face de contact 88 et sollicite la tige de piston 29 à l'encontre de l'organe de rappel pour se rapprocher du bouchon 28 et s'écarter du siège d'ouverture/fermeture ; et l'organe de poussée 111 du clapet de dé-freinage 110b repose sur la deuxième bosse 92 de la face de contact 88 et sollicite la tige de piston 29 à l'encontre de l'organe de rappel pour se rapprocher du bouchon 28 et s'écarter du siège d'ouverture/fermeture.

Au contraire, les organes de poussée 111 des clapets de freinage 109a et 109b se trouvent dans les premier et deuxième creux 89 et 91 de la face de contact 88.

Les premier et deuxième canaux principaux de dé-freinage 55 et 56 (non visibles sur cette figure) sont en communication fluidique par l'intermédiaire des deux canaux secondaires de dé-freinage 57 et 58 (non visibles sur cette figure).

Les canaux de freinage (non visibles sur cette figure) sont isolés entre eux.

L'organe d'appui 32 du mécanisme de rétroaction est sollicité par l'organe de rappel 33 et se trouve maintenu dans le creux 103 de la face de rétroaction 98. Une action de l'utilisateur est nécessaire sur le levier de commande 12 pour le rappeler dans la position neutre N.

Au surplus, la face de commutation 104 de la roue à came 24 n'actionne pas l'organe de commutation 37 (non visible sur cette figure).

Des variantes non illustrées sont présentées ci-après.

Le mécanisme à clapets peut comporter seulement un ou plusieurs clapets de freinage ou de dé-freinage.

Le mécanisme à clapets peut comporter seulement un clapet de freinage ou un clapet de dé-freinage ou, au contraire, il peut comporter plus de deux clapets de freinage et/ou plus de deux clapets de dé-freinage.

Le mécanisme à clapets peut comporter des clapets de freinage et/ou de dé-freinage de chaque côté de la roue à came, cette dernière étant alors formée avec plusieurs faces de contact.

Le mécanisme de commande peut être pourvu de plusieurs roues à came et le mécanisme à clapets peut comporter plusieurs jeux de clapets de chaque côté du support de levier ou bien sur un même côté du support de levier.

La roue à came peut être pourvue d'une face de rétroaction et/ou d'une face de commutation formée sur sa face frontale ou sur sa face arrière, plutôt que sur son contour, les profils des faces de rétroaction et/ou de commutation pouvant être concentriques avec le profil de la face de contact.

La roue à came peut être pourvue d'une face de contact formée sur son contour plutôt que sur sa face frontale.

La roue à came peut être dépourvue de face de rétroaction et/ou de face de commutation et le manipulateur peut être dépourvu de mécanisme de rétroaction associé et/ou de système de connexion électrique associé.

L'agencement des différents éléments du manipulateur dans son corps, en particulier du mécanisme de commande, du mécanisme à clapets, du mécanisme de rétroaction et/ou système de connexion électrique peut être différent de celui décrit ci-dessus et illustré sur les figures.

Plus généralement, l'invention ne se limite pas aux exemples décrits et représentés.

## Revendications

1. Dispositif d'actionnement d'un système de freinage ferroviaire pour véhicule ferroviaire à freins à au moins une garniture ou à au moins une semelle, comportant un mécanisme à clapets (16) et un mécanisme de commande (13) configuré pour agir sur ledit mécanisme à clapets, ledit dispositif d'actionnement (4) étant configuré pour admettre au moins une position de freinage dans laquelle ledit mécanisme à clapets agit sur au moins un clapet de freinage (109a, 109b) dudit mécanisme à clapets pour actionner ledit système de freinage ferroviaire (2) pour freiner ledit véhicule ferroviaire (1), et/ou au moins une position de dé-freinage dans laquelle ledit mécanisme à clapets agit sur au moins un clapet de dé-freinage (110a, 110b) dudit mécanisme à clapets pour actionner ledit système de freinage ferroviaire pour dé-freiner ledit véhicule ferroviaire, ledit mécanisme de commande comportant au moins une roue à came (24) qui est mobile en rotation et qui est pourvue d'au moins une face de contact (88) ayant un profil prédéterminé, ladite face de contact étant configurée pour agir directement sur ledit au moins un clapet de freinage ou sur ledit au moins un clapet de dé-freinage en fonction du sens de déplacement en rotation de ladite au moins une roue à came et de la position dudit dispositif d'actionnement ; **caractérisé en ce que** ledit dispositif est configuré pour admettre une pluralité de positions de freinage et/ou de dé-freinage, ledit mécanisme à clapets (16) comporte plusieurs clapets de freinage (109a, 109b) disposés par exemple en parallèle dans ledit dispositif (4) et/ou plusieurs clapets de dé-freinage (110a, 110b) disposés par exemple en parallèle dans ledit dispositif, et ladite au moins une roue à came (24) est configurée pour agir directement sur lesdits clapets de freinage et/ou de dé-freinage en fonction du sens et d'un angle de déplacement en rotation de ladite au moins une roue à came et de la position dudit dispositif d'actionnement parmi la pluralité de positions.

2. Dispositif selon la revendication 1, **caractérisé en ce que** ledit profil prédéterminé de ladite face de contact (88) de ladite au moins une roue à came (24) présente au moins une bosse (90, 92, 94) et au moins un creux (89, 91, 93) qui sont prévus respectivement pour ouvrir et pour fermer lesdits clapets de freinage et/ou de dé-freinage (109a, 109b, 110a, 110b).

3. Dispositif selon l'une des revendications 1 et 2, **caractérisé en ce que** ladite au moins une roue à came (24) est pourvue d'une butée angulaire (95) pour limiter la rotation de ladite au moins une roue à came dans les deux sens de déplacement en rotation.

4. Dispositif selon l'une quelconque des revendications 1 à 3, **caractérisé en ce qu'**il comporte un mécanisme de rétroaction (19) configuré pour agir sur ladite au moins une roue à came (24) lorsqu'elle est déplacée en rotation depuis une position neutre vers une position de freinage ou de dé-freinage, soit pour la rappeler dans sa position neutre, soit pour la maintenir dans sa position de freinage ou de dé-freinage.

5. Dispositif selon la revendication 4, **caractérisé en ce que** ledit mécanisme de rétroaction (19) comporte un organe de rappel (33) sollicitant un organe d'appui (32) configuré pour venir au contact d'une face de rétroaction (98) de ladite au moins une roue à came (24), ladite face de rétroaction ayant un profil complémentaire prédéterminé permettant le rappel ou le maintien de ladite au moins une roue à came respectivement dans sa position neutre ou dans sa position de freinage ou de dé-freinage.

6. Dispositif selon la revendication 5, **caractérisé en ce que** ledit mécanisme de rétroaction (19) comporte un bouchon (21) et une bague (66) entre lesquels est interposé ledit organe de rappel (33), lequel est formé par un ressort qui est en appui contre ledit bouchon et sur un premier côté de ladite bague, et ledit organe d'appui (32) est formé par une bille partiellement logée sur un second côté de ladite bague, opposé à son premier côté.

7. Dispositif selon l'une des revendications 5 et 6, **caractérisé en ce que** ledit profil complémentaire prédéterminé de ladite face de rétroaction (98) de ladite au moins une roue à came (24) présente au moins une paroi en rampe (100, 101) et au moins un creux (102, 103) qui sont prévus respectivement pour rappeler et pour maintenir ladite au moins une roue à came respectivement dans sa position neutre ou dans sa position de freinage ou de dé-freinage.

8. Dispositif selon l'une quelconque des revendications 5 à 7, **caractérisé en ce que** ladite face de contact (88) est formée sur une paroi frontale (86) de ladite au moins une roue à came (24) et ladite face de rétroaction (98) est formée sur une paroi de contour (84) de ladite au moins une roue à came, laquelle paroi de contour relie ladite paroi frontale à une paroi arrière (87) de ladite au moins une roue à came qui est opposée à ladite paroi frontale.

9. Dispositif selon l'une quelconque des revendications 1 à 8, **caractérisé en ce que** chaque dit clapet de freinage (109a, 109b) et/ou chaque dit clapet de dé-freinage (110a, 110b) dudit mécanisme à clapets (16) est formé par un organe de poussée (111), un bouchon (28) situé à l'opposé dudit organe de poussée, une tige de piston (29) pourvue, à une première extrémité, d'un premier logement (117) prévu pour former un siège (126) pour ledit organe de poussée et pourvue, à une deuxième extrémité opposée à ladite première extrémité, d'un deuxième logement (120) prévu pour recevoir au moins partiellement un organe de rappel (112), ladite tige de piston étant interposée entre ledit organe de poussée et ledit bouchon.

10. Dispositif selon la revendication 9, **caractérisé en ce que** ledit mécanisme à clapets (16) est configuré pour que, sans sollicitation extérieure, ledit organe de rappel (112) appuie sur ladite tige de piston (29) du côté de sa deuxième extrémité et écarte ladite tige de piston dudit bouchon (28), fermant ainsi ledit clapet de freinage (109a, 109b) ou de dé-freinage (110a, 110b), et aussi pour que, lorsque ladite au moins une roue à came (24) appuie sur ledit organe de poussée (111), ce dernier déplace ladite tige de piston à l'encontre dudit organe de rappel et la rapproche dudit bouchon en s'écartant d'un siège d'ouverture/fermeture (127) situé autour de ladite tige de poussée entre ledit bouchon et ledit organe de poussée, ouvrant ainsi ledit clapet de freinage ou de dé-freinage.

11. Dispositif selon la revendication 10, **caractérisé en ce qu'**il comporte des canaux de freinage (45, 48, 52, 53) et des canaux de dé-freinage (55, 56, 57, 58) et **en ce que** l'ouverture dudit clapet de freinage (109a, 109b), respectivement de dé-freinage (110a, 110b), met en communication fluidique lesdits canaux de freinage, respectivement de dé-freinage, et la fermeture dudit clapet de freinage, respectivement de dé-freinage, interrompt la communication fluidique entre lesdits canaux de freinage, respectivement de dé-freinage.

12. Dispositif selon l'une quelconque des revendications 1 à 11, **caractérisé en ce qu'**il comporte un corps (10) dans lequel est logé ledit mécanisme à clapets (16) et ledit mécanisme de commande (13), ainsi qu'un levier de commande (12) assujetti mécaniquement audit mécanisme de commande et pouvant être mis dans une pluralité de positions sélectionnables.

13. Dispositif selon la revendication 12, **caractérisé en ce que** ledit mécanisme de commande (13) comporte un support de levier (22) sur lequel est assujetti mécaniquement ledit levier de commande (12) et au moins un axe d'entraînement (26) assujetti mécaniquement par une première extrémité audit support de levier et par une deuxième extrémité, opposée à ladite première extrémité, à ladite au moins une roue à came (24).

14. Dispositif selon la revendication 13, **caractérisé en ce que** ledit mécanisme de commande (13) comporte un flasque (23) qui est monté libre sur ledit au moins un axe d'entraînement (26), qui est interposé entre ledit support de levier (22) et ladite au moins une roue à came (24), et qui est assujetti mécaniquement audit corps (10) dudit dispositif (4) pour assurer l'étanchéité entre ledit support de levier et ladite au moins une roue à came.

15. Véhicule ferroviaire à freins à au moins une garniture ou à au moins une semelle, comportant un système de freinage ferroviaire (2) configuré pour agir sur ladite au moins une garniture ou à au moins une semelle dudit véhicule ferroviaire, ainsi qu'un dispositif d'actionnement (4) selon l'une quelconque des revendications 1 à 14.

## Patentansprüche

1. Vorrichtung zur Betätigung eines Schienenbremssystems für Schienenfahrzeuge mit Bremsen mit zumindest einem Bremsbelag oder zumindest einer Bremssohle, enthaltend einen Ventilmechanismus (16) und einen Steuermechanismus (13), der dazu ausgelegt ist, auf den Ventilmechanismus einzuwirken, wobei die Betätigungsvorrichtung (4) dazu ausgelegt ist, zumindest eine Bremsposition zuzulassen, in der der Ventilmechanismus auf zumindest ein Bremsventil (109a, 109b) des Ventilmechanismus einwirkt, um das Schienenbremssystem (2) zum Bremsen des Schienenfahrzeugs (1) zu betätigen, und/oder zumindest eine Freigabeposition, in der der Ventilmechanismus auf zumindest ein Freigabeventil (110a, 110b) des Ventilmechanismus einwirkt, um das Schienenbremssystem zum Freigegen des Schienenfahrzeugs zu betätigen, wobei der Steuermechanismus zumindest ein Nockenrad (24) enthält, das drehbar ist und mit zumindest einer Kontaktfläche (88) mit einem vorbestimmten Profil versehen ist, wobei die Kontaktfläche dazu ausgelegt ist, in Abhängigkeit von der Richtung der Drehbewegung des zumindest einen Nockenrads und der Position der Betätigungsvorrichtung direkt auf das zumindest eine Bremsventil oder auf das zumindest eine Freigabeventil einzuwirken, **dadurch gekennzeichnet, dass** die Vorrichtung dazu ausgelegt ist, eine Vielzahl von Brems- und/oder Freigabepositionen zuzulassen, wobei der Ventilmechanismus (16) mehrere Bremsventile (109a, 109b), die beispielsweise parallel in der Vorrichtung (4) angeordnet sind, und/oder mehrere Freigabeventile (110a, 110b) enthält, 110b), die beispielsweise parallel in der Vorrichtung angeordnet sind, und wobei das zumindest eine Nockenrad (24) dazu ausgelegt ist, in Abhängigkeit von der Richtung und dem Winkel der Drehbewegung des zumindest einen Nockenrads und der Position der Betätigungsvorrichtung unter der Vielzahl von Positionen direkt auf die Brems- und/oder Freigabeventile einzuwirken.

2. Vorrichtung nach Anspruch 1, **dadurch gekennzeichnet, dass** das vorbestimmte Profil der Kontaktfläche (88) des zumindest einen Nockenrades (24) zumindest eine Erhebung (90, 92, 94) und zumindest eine Vertiefung (89, 91, 93) aufweist, die jeweils zum Öffnen bzw. Schließen der Brems- und/oder Freigabeventile (109a, 109b, 110a, 110b) vorgesehen sind.

3. Vorrichtung nach einem der Ansprüche 1 und 2, **dadurch gekennzeichnet, dass** das zumindest eine Nockenrad (24) mit einem Winkelanschlag (95) zur Begrenzung der Drehung des zumindest einen Nockenrades in beiden Richtungen der Drehbewegung versehen ist.

4. Vorrichtung nach einem der Ansprüche 1 bis 3, **dadurch gekennzeichnet, dass** sie einen Rückkopplungsmechanismus (19) enthält, der dazu ausgelegt ist, auf das zumindest eine Nockenrad (24) einzuwirken, wenn es aus einer neutralen Position in eine Brems- oder Freigabeposition drehend verlagert wird, um es entweder in seine neutrale Position zurückzubringen oder es in seiner Brems- oder Freigabeposition zu halten.

5. Vorrichtung nach Anspruch 4, **dadurch gekennzeichnet, dass** der Rückkopplungsmechanismus (19) ein Rückstellelement (33) enthält, das ein Abstützelement (32) beaufschlagt, das dazu ausgelegt ist, mit einer Rückkopplungsfläche (98) des zumindest einen Nockenrads (24) in Kontakt zu gelangen, wobei die Rückkopplungsfläche ein vorbestimmtes komplementäres Profil aufweist, das es ermöglicht, das zumindest eine Nockenrad in seine neutrale Position bzw. in seine Brems- oder Freigabeposition zurückzuführen oder darin zu halten.

6. Vorrichtung nach Anspruch 5, **dadurch gekennzeichnet, dass** der Rückkopplungsmechanismus (19) einen Verschluss (21) und einen Ring (66) enthält, zwischen denen das Rückstellelement (33) eingesetzt ist, das aus einer Feder gebildet ist, die sich gegen den Verschluss und auf einer ersten Seite des Rings abstützt, und das Abstützelement (32) aus einer Kugel gebildet ist, die teilweise auf einer zweiten Seite des Rings aufgenommen ist, die seiner ersten Seite entgegengesetzt ist.

7. Vorrichtung nach einem der Ansprüche 5 und 6, **dadurch gekennzeichnet, dass** das vorbestimmte komplementäre Profil der Rückkopplungsfläche (98) des zumindest einen Nockenrades (24) zumindest eine Rampenwand (100, 101) und zumindest eine Vertiefung (102, 103) aufweist, die jeweils vorgesehen sind, um das zumindest eine Nockenrad in seine neutrale Position bzw. in seine Brems- oder Freigabeposition zurückzubringen oder darin zu halten.

8. Vorrichtung nach einem der Ansprüche 5 bis 7, **dadurch gekennzeichnet, dass** die Kontaktfläche (88) an einer Stirnwand (86) des zumindest einen Nockenrades (24) ausgebildet ist und die Rückkopplungsfläche (98) an einer Konturwand (84) des zumindest einen Nockenrades ausgebildet ist, welche Konturwand die Stirnwand mit einer Rückwand (87) des zumindest einen Nockenrades verbindet, die der Stirnwand entgegengesetzt ist.

9. Vorrichtung nach einem der Ansprüche 1 bis 8, **dadurch gekennzeichnet, dass** jedes Bremsventil (109a, 109b) und/oder jedes Freigabeventil (110a, 110b) des Ventilmechanismus (16) aus einem Andrückelement (111), einem dem Andrückelement entgegengesetzt angeordneten Verschluss (28) und einer Kolbenstange (29) gebildet ist, die an einem ersten Ende mit einer ersten Aufnahme (117) versehen ist, die dazu vorgesehen ist, einen Sitz (126) für das Andrückelement zu bilden, und an einem dem ersten Ende entgegengesetzten zweiten Ende mit einer zweiten Aufnahme (120) versehen ist, die dazu vorgesehen ist, zumindest teilweise ein Rückstellelement (112) aufzunehmen, wobei die Kolbenstange zwischen dem Andrückelement und dem Verschluss eingesetzt ist.

10. Vorrichtung nach Anspruch 9, **dadurch gekennzeichnet, dass** der Ventilmechanismus (16) so ausgelegt ist, dass das Rückstellelement (112) ohne Beaufschlagung von außen auf die Kolbenstange (29) auf der Seite ihres zweiten Endes drückt und die Kolbenstange von dem Verschluss (28) wegbewegt, wodurch das Bremsventil (109a, 109b) oder das Freigabeventil (110a, 110b) geschlossen wird, und auch so, dass dann, wenn das zumindest eine Nockenrad (24) auf das Andrückelement (111) drückt, letzteres die Kolbenstange entgegen dem Rückstellelement bewegt und sie dem Verschluss annähert, indem es sich von einem Öffnungs-/Schließsitz (127) wegbewegt, der sich um die Kolbensstange herum zwischen dem Verschluss und dem Andrückelement befindet, wodurch das Brems- oder Freigabeventil geöffnet wird.

11. Vorrichtung nach Anspruch 10, **dadurch gekennzeichnet, dass** sie Bremskanäle (45, 48, 52, 53) und Freigabekanäle (55, 56, 57, 58) aufweist und dass das Öffnen des Bremsventils (109a, 109b) bzw. des Freigabeventils (110a, 110b) die Bremskanäle bzw. Freigabekanäle in Strömungsverbindung bringt und das Schließen des Bremsventils bzw. des Freigabeventils die Strömungsverbindung zwischen den Bremskanälen bzw. Freigabekanälen unterbricht.

12. Vorrichtung nach einem der Ansprüche 1 bis 11, **dadurch gekennzeichnet, dass** sie einen Körper (10), in dem der Ventilmechanismus (16) und der Steuermechanismus (13) aufgenommen sind, und einen Steuerhebel (12) enthält, der mechanisch mit dem Steuermechanismus verbunden ist und in eine Vielzahl von wählbaren Positionen gebracht werden kann.

13. Vorrichtung nach Anspruch 12, **dadurch gekennzeichnet, dass** der Steuermechanismus (13) einen Hebelträger (22), mit dem der Steuerhebel (12) mechanisch verbunden ist, und zumindest eine Antriebswelle (26) enthält, die an einem ersten Ende mit dem Hebelträger und an einem zweiten, dem ersten Ende entgegengesetzten Ende mit dem zumindest einen Nockenrad (24) mechanisch verbunden ist.

14. Vorrichtung nach Anspruch 13, **dadurch gekennzeichnet, dass** der Steuermechanismus (13) einen Flansch (23) aufweist, der frei an der zumindest einen Antriebswelle (26) montiert ist, der zwischen dem Hebelträger (22) und dem zumindest einen Nockenrad (24) angeordnet ist und der mechanisch mit dem Körper (10) der Vorrichtung (4) verbunden ist, um für die Dichtheit zwischen dem Hebelträger und dem zumindest einen Nockenrad zu sorgen.

15. Schienenfahrzeug mit Bremsen mit zumindest einem Bremsbelag oder zumindest einer Bremssohle, enthaltend ein Schienenbremssystem (2), das dazu ausgelegt ist, auf den zumindest einen Bremsbelag oder die zumindest eine Bremssohle des Schienenfahrzeugs einzuwirken, sowie eine Betätigungsvorrichtung (4) nach einem der Ansprüche 1 bis 14.

## Claims

1. Device for actuating a rail transport braking system for a rail vehicle having brakes with at least one lining or with at least one block, comprising a valve mechanism (16) and a control mechanism (13) configured to act on said valve mechanism, said actuating device (4) being configured to have at least one braking position in which said valve mechanism acts on at least one braking valve (109a, 109b) of said valve mechanism to actuate said rail transport braking system (2) to brake said rail vehicle (1), and/or at least one unbraking position in which said valve mechanism acts on at least one unbraking valve (110a, 110b) of said valve mechanism to actuate said rail vehicle braking system to unbrake said rail vehicle, said control mechanism comprising at least one cam wheel (24) which is able to rotate and which is provided with at least one contact face (88) having a predetermined profile, said contact face being configured to act directly on said at least one braking valve or on said at least one unbraking valve according to the direction of rotational movement of said at least one cam wheel and according to the position of said actuating device; **characterized in that** said device is configured to have a plurality of braking and/or unbraking positions, said valve mechanism (16) comprises several braking valves (109a, 109b) disposed for example in parallel in said device (4) and/or several unbraking valves (110a, 110b) disposed for example in parallel in said device, and said at least one cam wheel (24) is configured to act directly on said braking and/or unbraking valves according to the direction and an angle of rotational movement of said at least one cam wheel and according to the position of said actuating device from among the plurality of positions.

2. Device according to claim 1, **characterized in that** said predetermined profile of said contact face (88) and of said at least one cam wheel (24) has at least one bump (90, 92, 94) and at least one hollow (89, 91, 93) which are respectively provided to open and to close said braking and/or unbraking valves (109a, 109b, 110a, 110b).

3. A device according to one of claims 1 and 2, **characterized in that** said at least one cam wheel (24) is provided with an angular abutment (95) to limit the rotation of said at least one cam wheel in both directions of rotational movement.

4. Device according to any one of claims 1 to 3, **characterized in that** it comprises a retroaction mechanism (19) configured to act on said at least one cam wheel (24) when it is rotated from a neutral position to a braking or unbraking position, either to return it into its neutral position, or to hold it in its braking or unbraking position.

5. Device according to claim 4, **characterized in that** said retroaction mechanism (19) comprises a return member (33) acting on a bearing member (32) configured to come into contact with a retroaction face (98) of said at least one cam wheel (24), said retroaction face having a predetermined complementary profile enabling the return or the holding of said at least one cam wheel respectively to its neutral position or in its braking or unbraking position.

6. Device according to claim 5, **characterized in that** said retroaction mechanism (19) comprises a plug (21) and a ring (66) between which is interposed said return member (33), which is formed by a spring which bears against said plug and on a first side of said ring, and said bearing member (32) is formed by a ball partly accommodated on a second side of said ring, which is an opposite side to its first side.

7. A device according to one of claims 5 and 6, **characterized in that** said predetermined complementary profile of said retroaction face (98) of said at least one cam wheel (24) presents at least one ramp wall (100, 101) and at least one hollow (102, 103) which are respectively provided to return and to hold said at least one cam wheel respectively to its neutral position or in its braking or unbraking position.

8. Device according to any one of claims 5 to 7, **characterized in that** said contact face (88) is formed on a front wall (86) of said at least one cam wheel (24) and said retroaction face (98) is formed on a contour wall (84) of said at least one cam wheel, which contour wall links said front wall to a back wall (87) of said at least one cam wheel which is an opposite wall to said front wall.

9. Device according to any one of claims 1 to 8, **characterized in that** each said braking valve (109a, 109b) and/or each said unbraking valve (110a, 110b) of said valve mechanism (16) is formed by a push member (111), a plug (28) located at a remote opposite location from said push member, a piston rod (29) provided, at a first end, with a first socket (117) provided to form a seat (126) for said push member and provided, at a second end which is an opposite end to said first end, with a second socket (120) provided to receive at least partly a return member (112), said piston rod being interposed between said push member and said plug.

10. Device according to claim 9, **characterized in that** said valve mechanism (16) is configured such that, without being acted upon externally, said return member (112), bears on said piston rod (29) by its second end and moves said piston rod away from said plug (28), thereby closing said braking (109a, 109b) or unbraking (110a, 110b) valve, and also such that, when said at least one cam wheel (24) bears on said push member (111), the latter moves said piston rod against said return member and brings it towards said plug while moving apart from an opening/closing seat (127) located around said piston rod between said plug and said push member, thereby opening said braking or unbraking valve.

11. Device according to claim 10, **characterized in that** it comprises braking channels (45,48, 52, 53) and unbraking channels (55, 56, 57, 58) and **in that** the opening of said braking valve (109a, 109b) and respectively said unbraking valve (110a, 110b), places in fluidic communication said braking channels and respectively said unbraking channels, and the closure of said braking valve and respectively said unbraking valve, interrupts the fluidic communication between said braking channels and respectively said unbraking channels.

12. Device according to any one of claims 1 to 11, **characterized in that** it comprises a body (10) in which is housed said valve mechanism (16) and said control mechanism (13), as well as a control lever (12) mechanically connected to said control mechanism and which can be placed in a plurality of selectable positions.

13. Device according to claim 12, **characterized in that** said control mechanism (13) comprises a lever mounting (22) to which is mechanically connected said control lever (12) and at least one drive shaft (26) mechanically connected by a first end to said lever mounting and by a second end, which is an opposite end to said first end, to said at least one cam wheel (24).

14. Device according to claim 13, **characterized in that** said control mechanism (13) comprises a flange (23) which is freely mounted on said at least one drive shaft (26), which is interposed between said lever mounting (22) and said at least one cam wheel (24), and which is mechanically connected to said body (10) of said device (4) to provide the sealing between said lever mounting and said at least one cam wheel.

15. Rail vehicle having brakes with at least one lining or with at least one block, comprising a rail transport braking system (2) configured to act on said at least one lining or on at least one block of said rail vehicle, as well as an actuating device (4) according to any one of claims 1 to 14.
